# NEUE EUROPÄISCHE PATENTSCHRIFT

(11) **EP 1 778 444 B2**
(45) Veröffentlichungstag und Bekanntmachung des Hinweises auf die Entscheidung über den Einspruch: **01.08.2012**
(45) Hinweis auf die Patenterteilung: 17.09.2008
(21) Anmeldenummer: 05752519.8
(22) Anmeldetag: 20.06.2005
(51) Int. Cl.: B25H 3/00, H02J 7/00, B25F 5/02

(54) **LADESCHALE FÜR AKKUSCHRAUBER**
CHARGING CRADDLE FOR CORDLESS SCREWDRIVER
SOCLE DE CHARGEUR POUR VISSEUSE A BATTERIE

(30) Priorität: 09.08.2004 DE 10038788
(43) Veröffentlichungstag der Anmeldung: 02.05.2007
(60) Teilanmeldung: 07120893.8
(73) Patentinhaber: ROBERT BOSCH GMBH, 70442 Stuttgart (DE)
(72) Erfinder: ROEHM, Heiko, 70176 Stuttgart (DE); BERGMANN, Julian, 70178 Stuttgart (DE); MEEUWISSEN, Jean-Paul, 72669 Unterensingen (DE)
(86) Internationale Anmeldenummer: PCT/EP2005/052853
(87) Internationale Veröffentlichungsnummer: WO 2006/015900

(56) Entgegenhaltungen:
- EP-A- 0 951 127
- EP-A2- 0 176 210
- CH-A- 675 330
- US-A- 3 783 364
- US-A- 4 703 852
- US-A- 5 533 843
- US-A1- 2004 017 177
- US-B1- 6 267 238

## Beschreibung

### Stand der Technik

Die vorliegende Erfindung geht aus von einer Ladeschale für einen Akkuschrauber gemäß dem Oberbegriff des Anspruchs 1.

Eine derartige Ladeschale geht beispielsweise aus der US 5 533 843 hervor.

Es gibt bereits Akkuschrauber in der Leistungsklasse zwischen 2.4V bis 3.6V, wie beispielweise aus der EP 1066 930 bekannt. Diese haben zumeist mehrere NiCd-Zellen als Energiespeicher, einen Ein-Aus-Schalter mit kurzer Schalttaste und ohne stufenlose Drehzahlregelung sowie einen Schalter zur Umschaltung von Links- auf Rechtslauf, ein die Motordrehzahl untersetzendes Getriebe, insbesondere Planetengetriebe, und einen Motor mit einem Standard-Durchmesser von 27.5mm. Dabei gibt es stabförmige und pistolenförmige Ausführungen sowie Ausführungen mit winkelverstellbarem Griff. Diese Geräte werden zum Laden entweder über einen Stecker mit dem Ladegerät verbunden - ähnlich wie ein Handy oder ein Rasierapparat - oder über eine Halterung mit Kontakten, in die das Gerät gelegt wird. Die Halterungen sind z. B. an einer Wand befestigbar, um die Handhabung beim Laden zu vereinfachen.

Dazu muss zuvor für das Ladegerät und die elektrische Verbindung der Lädemodus hergestellt werden, was jedoch nicht automatisch nach jedem Einsatz geschieht. Dadurch ist das Gerät oft gerade dann nicht einsatzbereit ist, wenn es benötigt wird, wobei der bekannte Memoryeffekt für herkömmliche NiCd-Akkus nachteilig hinzukommt. NiCd-Akkus entladen nach einer gewissen Zeit ohne Leistungsabgabe, so dass damit bestückte Akku-Schrauber auch unbenutzt nach kurzer Zeit teilentladen sind. Werden sie teilentladen in den Lademodus versetzt, steht aufgrund des Memoryeffekts nach dem Laden nur die Differenz der Neulademenge - und damit eine verringerte Leistung - zur Verfügung.

Ein weiterer Nachteil der bekannten Akkuschrauber ist die begrenzte Verfügbarkeit von Schraubbits bzw: unterschiedlichen Einsatzwerkzeugen.

Die Lösung dieser Aufgabe erfolgt durch eine Ladeschale für einen Akkuschrauber, welche die Merkmale des Anspruchs 1 aufweist. Weitere vorteilhafte Ausgestaltungen der Erfindung sind in den Unteransprüchen beschrieben.

### Zeichnungen

Nachstehend ist die Erfindung anhand eines Ausführungsbeispiels mit zugehöriger Zeichnung näher erläutert.

Es zeigen
Figur 1 (gelöscht)
Figur 2 (gelöscht)
Figur 3 eine Seitenansicht des in einer Ladeschale positionierten Akkuschraubers
*Figur 4* (gelöscht)
Figur 5 einen Draufsicht auf die Ladeschale mit Akkuschrauber in Ladeposition
Figur 6 eine Hinteransicht der Ladeschale mit Akkuschrauber gemäß Figur 5
Figur 7 eine Seitenansicht der Ladeschale mit Akkuschrauber gemäß Figur 5 mit separatem Bithalter und
Figur 8 eine räumliche Ansicht einer Ladeschale von oben.

### Beschreibung des Ausführungsbeispiels

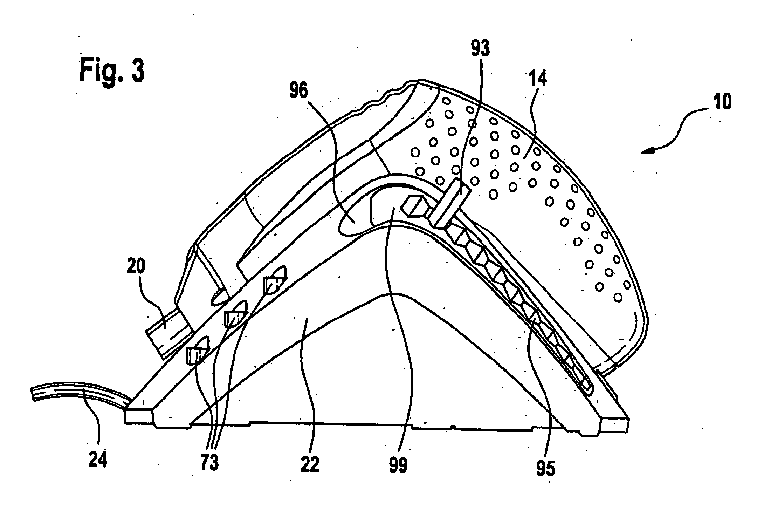

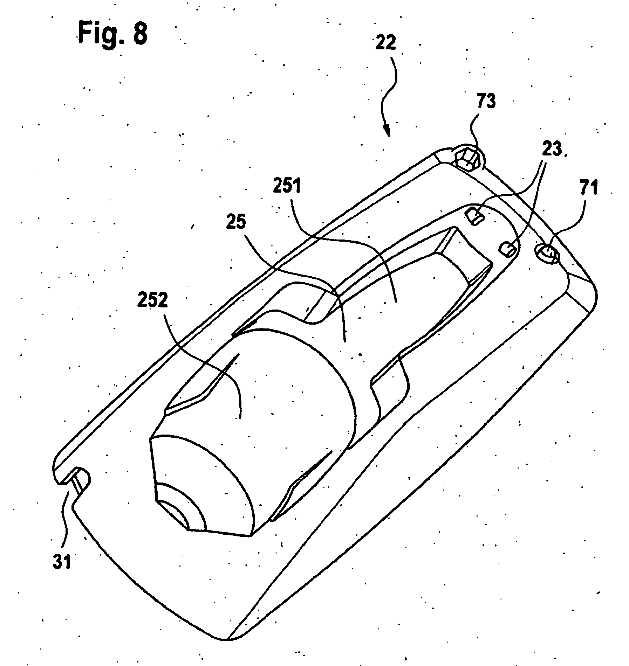

Figur 3 zeigt eine kastenartige Ladeschale 22, deren von der Seite betrachtete Außenkontur einem auf seiner Basisseite stehenden Dreieck entspricht. Die Schrägflächen sind der ihnen beim Auflegen des Akkuschraubers 10 zugewandten, pistolenförmigen Kontur des Akkuschraubers 10 angeglichen und nutartig vertieft. Der Akkuschrauber 10 kann daher mit seiner Innenseite in passende Einbettungen 25 (Fig. 8) für den Handgriff 14 bzw. des Motor- und Getriebegehäuse 12 und 18 spielfrei eintreten, und darin durch sein Eigengewicht gesichert lagern, wobei die Kontaktierung zwischen seinen Ladekontaktzungen 38 und den Ladekontakten 23 der Ladeschale 22 besonders sicher ist.

Die Ladekontakte 23 ragen aus der Kontur der Einbettung 25 der Ladeschale 23 heraus nach oben, so dass sich der Akkuschrauber 10 beim Einlegen in die entsprechende Einbettung 25 der Ladeschale 22 mit seinem Eigengewicht über seine Ladekontaktzungen 37 an den federnden Ladekontakten 23 (Fig. 8) abstützt. Allein durch Auflegen des Akkuschraubers 10 auf die vorgesehene Stelle der Ladeschale 22 stellt sich sofort der Ladezustand mit hörbarem Klicken durch mechanisch sichere Kontaktierung ein, sofern die Ladeschale 22 über ihr Elektrokabel 24 an die Netzspannung angeschlossen ist. Dazu tritt aus der Ladeschale 22 in Betrachtungsrichtung nach links das Elektrokabel 24 zum Netzanschluß bzw. zur Stromversorgung der Ladeschale 22.

Im hinteren, dem Handgriff 14 des Akkuschraubers 10 zugeordneten Bereich trägt die Ladeschale 22 einen lösbar eingeklipsten Bithalter 99. Dieser hat mehrere Einstecköffnungen 95 zur verliersicheren Aufnahme von Standard-Schraubbits mit Sechskantschaft. Außerdem trägt die Ladeschale auf ihrer Oberseite vor dem Bithalter 99 drei weitere, feste Einstecköffnungen 73 für Schraub- bzw. Bohrbits .

Figur 4 zeigt eine ausschnittsweise Vergrößerung der ersten Halbschale 16 mit den eingefügten Einzelteilen gemäß Figur 1, wobei die Ausgestaltung des Akkus 40 mit angrenzenden Teilen sowie der Platine 36 mit den daran befestigen Teilen sowie der Ein-Ausschalttaste 26 und den Ladekontaktzungen 37 deutlich erkennbar ist.

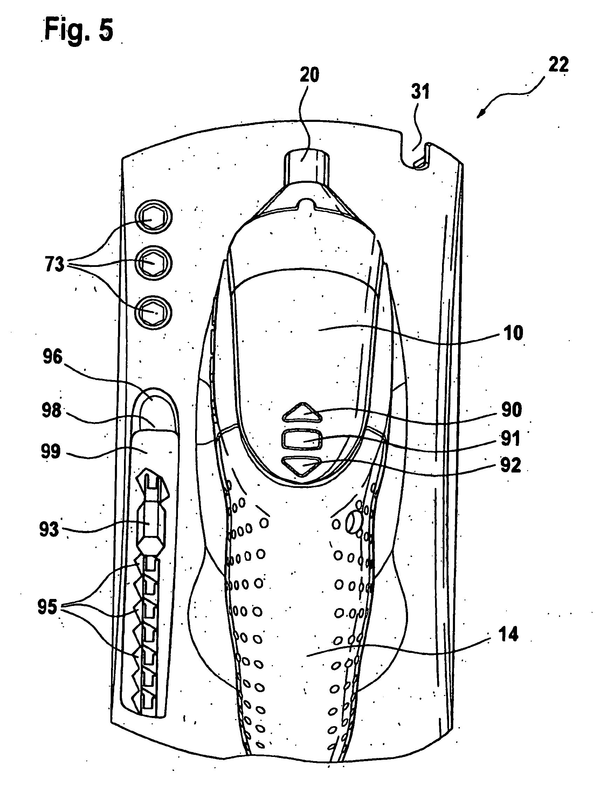

Figur 5 zeigt eine Ansicht von oben auf den in der Ladeschale 22 in Ladeposition sitzenden Akkuschrauber 10, wobei in Betrachtungsrichtung links neben dem Handgriff 14 und parallel zu diesem ein rot eingefärbter Bithalter 99 erkennbar ist. Zur überrastbaren Aufnahme des Bithalters 99 weist die Ladeschale 22 eine nutartige, bereichsweise hinterschnittene Vertiefung 98 auf, die geringfügig schmaler als der Bithalter 99 ist. Da dieser aus elastischem Material besteht, kann er durch festes darauf Drücken bequem in die Vertiefung 98 einrastend lagegesichert werden.

Die Vertiefung 98 ist länger als die Längserstreckung des Bithalters 99, so dass nach Einsetzen des Bithalters 99 in die Vertiefung 98 diese mit einem Restbereich 96 frei bleibt zum Untergreifen bzw. zwecks Entnahme des Bithalters 99 mit einem Finger.

In federelastisch verengbare Fächer 95 des magazinartigen Bithalters 99 sind nahezu senkrecht zur Außenkontur der Schrägflächen des Ladeschale 22 Sechskantbits 93 gegen Verlieren gesichert, kraftschlüssig gealtert einlegbar.

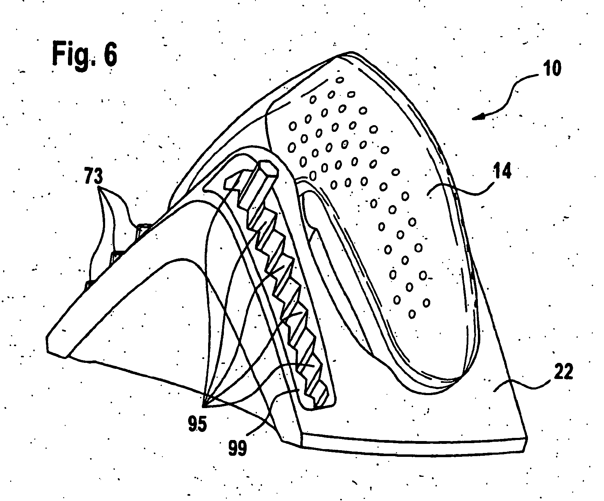

Figur 6 zeigt eine Ansicht der Ladeschale 22 schräg von hinten mit aufgelegtem Akkuschrauber 10. Dabei ist der entnehmbare Bithalter 99 mit etwa zehn Fächern 93 zum Einstecken von Schräubbits, gemäß Figur 5 erkennbar und die drei festen Bit-Einstecköffnungen 73 im vorderen Bereich der Ladeschale 22. Dabei ist erkennbar, dass der Bithalter 99 in die Außenkontur des oberen Bereichs der Ladeschale 22 bündig eingepaßt ist.

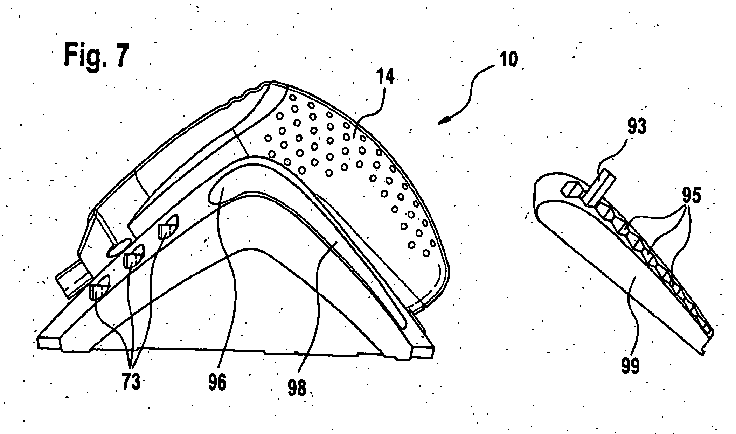

Figur 7 zeigt eine Seitenansicht der Ladeschale 22 mit aufgelegtem Akkuschrauber 10 sowie mit in Betrachtungsrichtung links davon getrennt angeordnet gezeichnetem Bithalter 99.

Figur 8 Zum Zwecke der Erläuterung, aber nicht als zur Erfindung gehörend, zeigt eine Draufsicht von oben auf eine Ladeschale 22 mit Blick auf die Einbettung 25, die in eine Handgriffbettung 251 und einer Getriebegehäusebettung 252 unterteilt ist, so dass der Akkuschrauber 10 bündig und nahezu spielfrei eindeutig und narrensicher so in die Ladeschale 22 einlegbar ist, dass er sicher aufliegt und seine Ladekontaktzungen 37 (Figur 1, 2, 4) sicheren Kontakt mit den Ladekontakten 23 der Ladeschale 22 behalten.

## Patentansprüche

1. Ladeschale für einen Akkuschrauber (10) mit einem Gehäuse (12, 18) mit einem, insbesondere pistolenartig abgewinkelten, Handgriff (14) mit, vorzugsweise fest eingebautem, Akku (40), sowie mit Ladekorltaktzungen (37) zum Aufladen des Akkus (40) auf der Ladeschale (22), wobei der Akkuschrauber (10) einen Akku (40) aufweist, der als Lithium-Ionen (Li-Ion)-Zelle ausgestaltet ist und zeitlich unbegrenzt, insbesondere in Benutzungspausen, auf eine Ladeschale (22) ablegbar ist, wobei der Lademodus automatisch herstellbar ist, und die Ladeschale (22) als Träger zur unverlierbaren Aufbewahrung von Einsatzwerkzeugen des Akkuschraubers (10), Insbesondere für Schraubbits, vorgesehen ist, wobei die Ladeschale (22) mindestens einen lösbar halterbaren Bithalter (99) zur Aufnahme mehrerer Bits (93), trägt, die betriebsgemäß in Verbindung mit dem Akkuschrauber (10) einsetzbar, insbesondere drehsicher einsteckbar, sind, **dadurch gekennzeichnet, dass** zur überrastbaren Aufnahme des Bithalters (99) die Ladeschale (22) eine nutartige, bereichsweise hinterschnittene Vertiefung (98) aufweist, die geringfügig schmaler als der Bithalter (99) ist, und der Bithalter (99) aus elastischem Material besteht, wobei die Vertiefung (98) länger als die Längserstreckung des Bithalters (99) ist, so dass nach Einsetzen des Bithalters (99) in die Vertiefung (98) die Vertiefung (98) mit einem Restbereich (96) frei bleibt zum Untergreifen bzw. zwecks Entnahme des Bithalters (99) mit einem Finger.

2. Ladeschale nach Anspruch 1, **dadurch gekennzeichnet, dass** der Bithalter (99) seitlich an der Ladeschale (22) halterbar ist und dabei bündig in die Außenkontur der Ladeschale (22) eingepasst ist

3. Ladeschale nach einem der Ansprüche 1 oder 2, **dadurch gekennzeichnet, dass** der Bithalter (99) parallel zur Vertiefung für den Handgriffbereich des Akuschraubers (10) angeordnet ist.

4. Ladeschale nach einem der vorhergehenden Ansprüche, **dadurch gekennzeichnet, dass** der Bithalter (99) in der Signalfarbe rot und die Ladeschale (22) in der Farbe schwarz und/oder dunkelgrün und/oder dunkelblau gehalten ist.

5. Ladeschale nach einem der vorhergehenden Ansprüche, **dadurch gekennzeichnet, dass** der Bithafter (99) mehrere Einstecköffnungen (95) zur verliersicheren Aufnahme von Schraubbits (93) aufweist.

6. Ladeschale nach einem der vorhergehenden Ansprüche, **dadurch gekennzeichnet, dass** Einstecköffnungen (73, 95) für die Bits (93) lotrecht zur Kontur der Ladeschale (22) verlaufend angeordnet sind.

7. Ladeschale nach Anspruch 6, **dadurch gekennzeichnet, dass** die Ladeschale (22) in ihrem vorderen Bereich fest angeordnete Einstecköffnungen (73) zur unverlierbaren Aufnahme von Schraubbits (93), insbesondere in einer Reihe parallel zur Erstreckung des Bithalters (99) angeordnet, trägt.

8. Ladeschale nach einem der vorhergehenden Ansprüche, **gekennzeichnet durch** eine kastenartige Ladeschale, deren von der Seite betrachtete Außenkontur einem auf seiner Basisseite stehenden Dreieck entspricht, wobei die Schrägflächen der ihnen beim Auflegen des Akkuschraubers (10) zugewandten, pistolenförmigen Kontur des Akkuschraubers (10) angeglichen und nutartig vertieft sind, so dass der Akkuschrauber (10) mit seiner Innenseite in passende Einbettungen (25) für den Handgriff (14) und das Motor- und Getriebegehäuse (12, 18) spielfrei eintritt und **durch** sein Eigengewicht gesichert lagerbar ist und die Kontaktierung zwischen den Ladekontaktzungen (37) des Akkuschraubers (10) und den Ladekontakten (23) der Ladeschale (22) gewährleistet ist.

9. Ladeschale nach Anspruch 8, **dadurch gekennzeichnet, dass** die Einbettung (25) in eine Handgriffeinbettung (251) und eine Getriebegehäuseeinbettung (252) unterteilt ist, so dass der Akkuschrauber (10) bündig und nahezu spielfrei eindeutig und narrensicher in die Ladeschale 22 einlegbar ist.

## Claims

1. Charging cradle for a cordless screwdriver (10), having a housing (12, 18) having a handle (14), which is angled in particular in the manner of a pistol, having a, preferably permanently installed, battery (40), and also having charging contact tongues (37) for charging the battery (40) on the charging cradle (22), wherein the cordless screwdriver (10) has a battery (40) which is designed as a lithium-ion (Li-Ion) cell and can be placed on a charging cradle (22) for an unlimited time, in particular during pauses in use, wherein the charging mode can be produced automatically, and the charging cradle (22) is provided as a support for captively storing application tools of the cordless screwdriver (10), in particular for screwdriving bits, wherein the charging cradle (22) carries at least one detachably mountable bit holder (99) for accommodating a plurality of bits (93) which can be used operationally in conjunction with the cordless screwdriver (10) and can be inserted in particular in a rotationally secure manner, **characterized in that**, in order to accommodate the bit holder (99) in an overlatching manner, the charging cradle (22) has a groove-like, partly undercut recess (98) which is slightly narrower than the bit holder (99), and the bit holder (99) consists of elastic material, wherein the recess (98) is longer than the longitudinal extent of the bit holder (99), such that, after the bit holder (99) is inserted into the recess (98), a residual region (96) of the recess (98) remains free for grasping from below, or for the purpose of removing the bit holder (99) with a finger.

2. Charging cradle according to Claim 1, **characterized in that** the bit holder (99) can be mounted laterally on the charging cradle (22) and in the process is fitted in a flush manner into the outer contour of the charging cradle (22).

3. Charging cradle according to either of Claims 1 and 2, **characterized in that** the bit holder (99) is arranged parallel to the recess for the handle region of the cordless screwdriver (10).

4. Charging cradle according to one of the preceding claims, **characterized in that** the bit holder (99) is coloured signal red and the charging cradle (22) is coloured black and/or dark green and/or dark blue.

5. Charging cradle according to one of the preceding claims, **characterized in that** the bit holder (99) has a plurality of insertion openings (95) for captively accommodating screwdriving bits (93).

6. Charging cradle according to one of the preceding claims, **characterized in that** insertion openings (73, 95) for the bits (93) are arranged to run perpendicularly to the contour of the charging cradle (22).

7. Charging cradle according to Claim 6, **characterized in that** the charging cradle (22) has fixedly arranged insertion openings (73) in its front region, in particular in a row parallel to the extent of the bit holder (99), for captively accommodating screwdriving bits (93).

8. Charging cradle according to one of the preceding claims, **characterized by** a box-like charging cradle, the outer contour of which, as viewed from the side, corresponds to a triangle standing on its base, wherein the oblique faces are adapted to the pistol-like contour of the cordless screwdriver (10), said contour facing said oblique faces when the cordless screwdriver (10) is attached, and are recessed in a groove-like manner, such that the inner side of the cordless screwdriver (10) fits without play into matching embedding means (25) for the handle (14) and the motor and gear-mechanism housing (12, 18) and can be mounted in a secured manner on account of its dead weight, and contact is ensured between the charging contact tongues (37) of the cordless screwdriver (10) and the charging contacts (23) of the charging cradle (22).

9. Charging cradle according to Claim 8, **characterized in that** the embedding means (25) is subdivided into a handle embedding means (251) and a gear-mechanism housing embedding means (252), such that the cordless screwdriver (10) can be inserted in a flush manner and virtually without play into the charging cradle (22) in an unambiguous and fool-proof manner.

## Revendications

1. Socle de chargeur pour visseuse à batterie (10), avec un boîtier (12, 18) avec une poignée (14), en particulier coudée en forme de pistolet, avec une batterie (40) de préférence intégrée fixement, ainsi qu'avec des langues de contact de charge (37) pour charger la batterie (40) sur le socle de chargeur (22), la visseuse à batterie (10) présentant une batterie (40) qui est configurée sous forme de pile à ions lithium (ions Li), et qui peut être placée sans limitation de temps, en particulier dans des intervalles entre utilisations, sur un socle de chargeur (22), le mode de charge pouvant être établi automatiquement, et le socle de chargeur (22) étant prévu sous forme de support pour conserver de manière imperdable des outils à insérer de la visseuse à batterie (10), notamment pour des embouts de vissage, le socle de chargeur (22) portant au moins un porte-embouts (99) pouvant être retenu de manière amovible, pour recevoir plusieurs embouts (93), qui peuvent être utilisés en fonction du mode d'utilisation en association avec la visseuse à batterie (10), notamment qui peuvent être enfichés de manière solidaire en rotation, **caractérisé en ce que** pour le logement par encliquetage par le dessus du porte-embouts (99), le socle de chargeur (22) présente un renfoncement (98) de type rainure, par endroits en contre-dépouille, qui est légèrement plus étroit que le porte-embouts (99), et le parte-embouts (99) se compose de matériau élastique, le renfoncement (98) etant plus long que l'étendue longitudinale du porte-embouts (99) de sorte qu'après l'insertion du porte-embouts (99) dans le renfoncement (98), le renfoncement (98) reste libre avec une zone restante (96) pour venir en prise par le dessous ou pour enlever le porte-embouts (99) avec un doigt.

2. Socle de chargeur selon la revendication 1, **caractérisé en ce que** le porte-embouts (99) peut être retenu latéralement sur le socle de chargeur (22) et est ainsi adapté par affleurement au contour extérieur du socle de chargeur (22).

3. Socle de chargeur selon l'une quelconque des revendications 1 ou 2, **caractérisé en ce que** le porte-embouts (99) est disposé parallèlement au renfoncement pour la région de poignée de la visseuse à batterie (10).

4. Socle de chargeur selon l'une quelconque des revendications précédentes, **caractérisé en ce que** le porte-embouts (99) a une couleur signalétique rouge et le socle de chargeur (22) a une couleur noire et/ou vert foncé et/ou bleu foncé.

5. Socle de chargeur selon l'une quelconque des revendications précédentes, **caractérisé en ce que** le porte-embouts (99) présente plusieurs ouvertures d'insertion (95) pour recevoir de manière imperdable des embouts de vissage (93).

6. Socle de chargeur selon l'une quelconque des revendications précédentes, **caractérisé en ce que** des ouvertures d'enfichage (73, 95) pour les embouts (93) sont disposées de manière à s'étendre à l'aplomb du contour du socle de chargeur (22).

7. Socle de chargeur selon la revendication 6, **caractérisé en ce que** le socle de chargeur (22) présente dans sa région avant des ouvertures d'enfichage (73) disposées fixement pour recevoir de manière imperdable des embouts de vissage (93), en particulier disposées dans une rangée parallèle à l'étendue du porte-embouts (99).

8. Socle de chargeur selon l'une quelconque des revendications précédentes, **caractérisé par** un socle de chargeur en forme de boîte, dont le contour extérieur considéré depuis le côté correspond à un triangle posé sur sa base, les faces obliques étant adaptées au contour de la visseuse à batterie (10) en forme de pistolet, tourné vers elles lors de la pose de la visseuse à batterie (10), et étant renfoncées en forme de rainure, de sorte que la visseuse à batterie (10) entre sans jeu avec son côté interne dans des encastrements adaptés (25) pour la poignée (14) et le boîtier du moteur et de la transmission (12, 18), et puisse être supportée de manière sûre sous l'effet de son poids propre et de sorte que le contact entre les langues de contact de charge (37) de la visseuse à batterie (10) et les contacts de charge (23) du socle de chargeur (22) soit assuré.

9. Socle de chargeur selon la revendication 8, **caractérisé en ce que** l'encastrement (25) est divisé en un encastrement pour la poignée (251) et un encastrement pour le boîtier de transmission (252), de sorte que la visseuse à batterie (10) puisse être insérée en affleurement et pratiquement sans jeu nettement et de manière aisée dans le socle de chargeur (22).
